# EUROPEAN PATENT APPLICATION

(11) **EP 2 011 687 A2**
(43) Date of publication of application: **07.01.2009**
(21) Application number: 08102589.2
(22) Date of filing: 13.03.2008
(51) Int. Cl.: B60P 1/44, B60P 3/055

(54) **An apparatus for unloading small items from containers**

(30) Priority: 22.03.2007 IT RE20070041
(71) Applicant: A.C.M.I. S.p.A., 43060 Fornovo Di Taro (Parma) (IT)
(72) Inventor: Oppici, Giorgio, 43045 Fornovo di Taro (Parma) (IT)
(74) Representative: Corradini, Corrado

(57) **Abstract**

An apparatus for removing containers from a loading plane (1) of a truck comprising at least a side-member positioned above, at a distance from, and parallel to, a lateral edge of the plane, on which side-member slide moves, to which slide a first frame is inferiorly constrained; a ladder (5) being hinged to a base of the first frame, which ladder can be arranged in a lowered position, resting against a lower cross-member of the first frame and in a raised position internally of an outer bulk of the first frame; a sliding plate being provided on an upright which sliding plate hingedly bears at least a second frame, which second frame can be arranged in a lowered position, approximately perpendicular to the upright and in a raised position adjacent to the upright.

## Description

This invention concerns an apparatus which facilitates unloading of substantially cylindrical containers of small dimensions from trucks.

In particular the invention concerns containers made of transparent synthetic resin, of a capacity of around 20 litres, similar to large bottles for containing mineral water for supplying known types of automatic distributors installed in workplaces.

These containers are transported in trucks, carried on superposable planes superiorly exhibiting a cradle able to receive two pairs of containers side-by-side, and inferiorly exhibiting four feet for standing a plane in superposition above an underlying plane.

The planes are at least anteriorly open, and they can be moved individually using a common fork-lift truck.

Adjacent stacks of planes are arranged on the loading plane of the transporter truck, each stack being situated adjacent to a lateral edge of the loading plane of the truck, with the mouth of the container facing outwards, in order to facilitate removal of the container at the place of use.

At present, each container is manually unloaded by an operator who sometimes uses a ladder, but more often climbs up the side of the truck to extract the container, grasping it by the mouth section, and bringing it down to ground level where it is loaded onto a small truck.

This procedure is not free from drawbacks, given that the most elementary safety rules are ignored.

The precarious position of the operator who has climbed up the side of the truck at times leads to falls which are likely to cause physical harm.

Even if the operator does not fall, he/she has to perform significant physical exertion in a position which is not at all comfortable, and which within a short period of time may impair his/her health by causing damage to the spinal column and shoulder and arm joints.

The aim of this patent is to provide a structure which allows containers to be collected comfortably and safely, thus protecting the operator from accidents, facilitating his/her work and reducing physical exertion.

This aim is achieved by the invention with an apparatus having the characteristics claimed in claim 1.

The subordinate claims express secondary characteristics of the apparatus which improve the efficacy and functionality thereof.

The advantages and functional and constructional characteristics of the invention will emerge from the following detailed description, which, with the aid of the appended figurse of the drawings, illustrates a preferred embodiment thereof, provided by way of a non-limiting example.

Figure 1 shows a perspective view of the apparatus.

Figure 2 shows a side view of the apparatus.

Figure 3 shows a perspective view of a detail of the apparatus.

Figure 4 shows a side view of the detail of figure 3.

Figure 5 shows a view along section V-V in figure 4.

Figure 6 shows an enlarged view of a detail in figure 4.

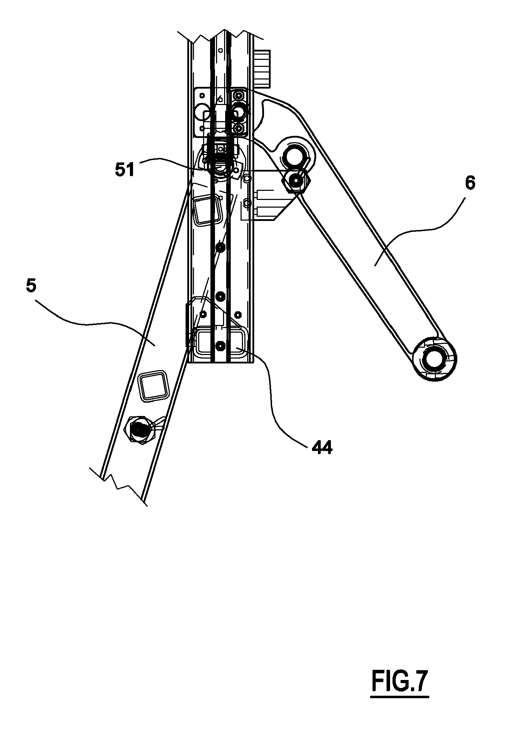

Figure 7 shows an enlarged view of a detail in figure 4.

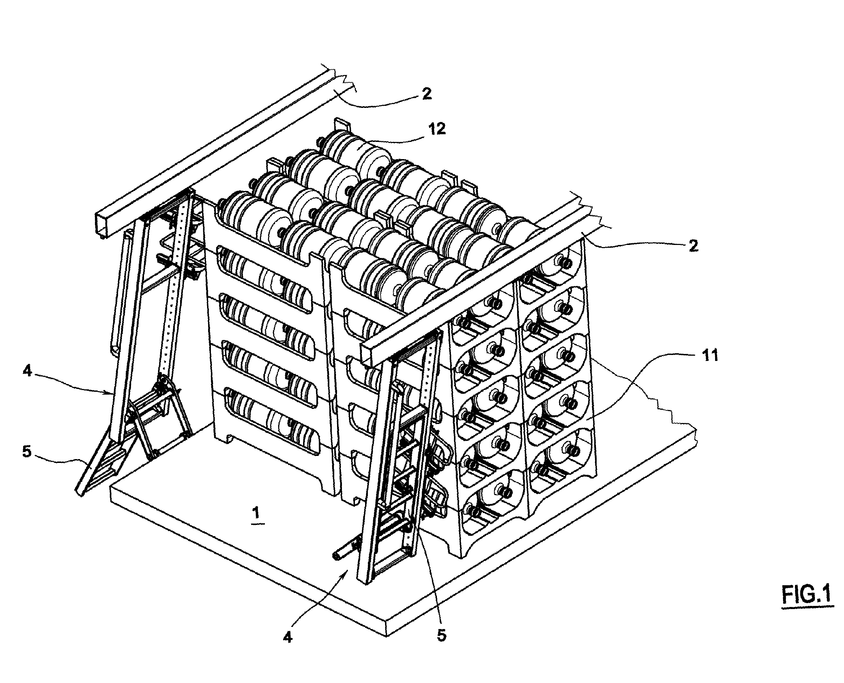

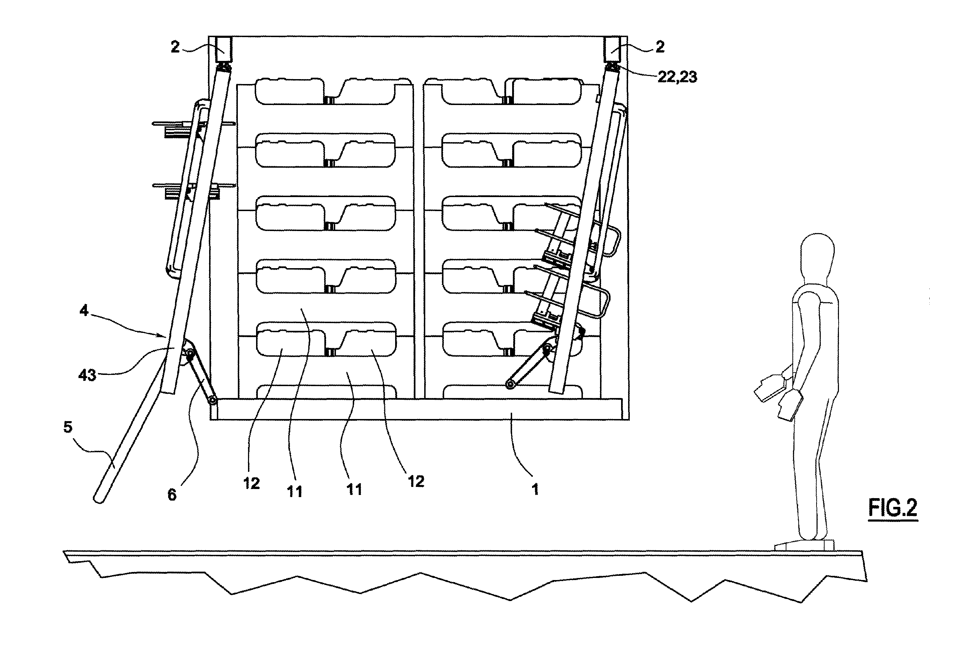

Figures 1 and 2 show the loading plane 1 of the truck, on each side of which loading plane 1 a rectangular frame is situated, which is parallel to the direction of travel and which exhibits an upper member 2 located at a distance from the loading plane, and parallel to an edge of the loading plane.

Adjacent stacks of planes 11 are positioned on the loading plane 1, each of which contains two pairs of containers 12 side-by-side, with mouths thereof facing towards the edge of the loading plane 1.

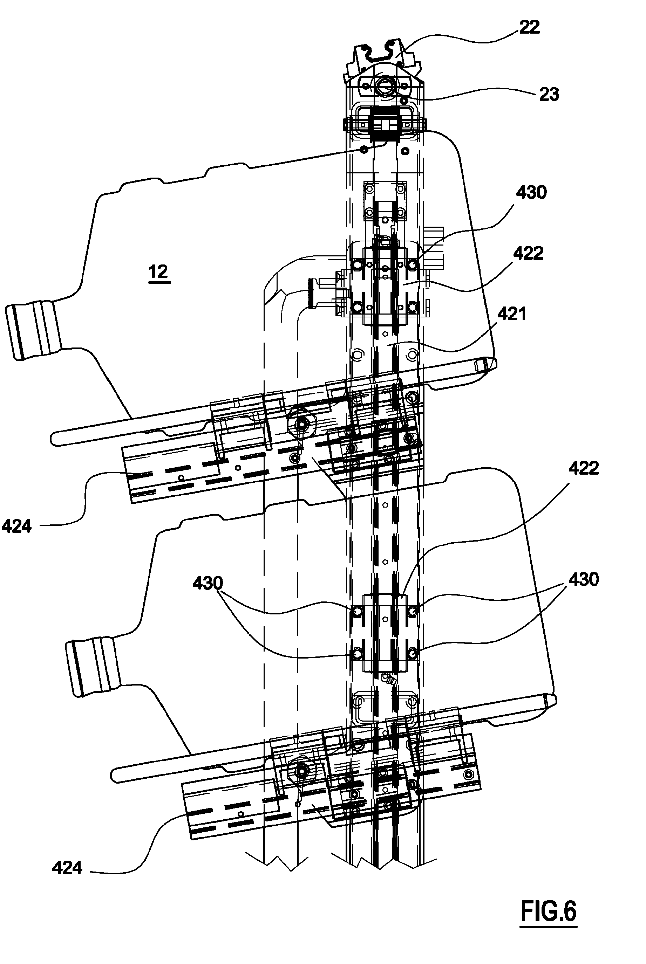

Each of the upper members 2 is configured as an inferiorly open guide in which a slide (not illustrated) moves, to which slide a lower body 22 is constrained, comprising two hinge pivots 23 on which an underlying part of the apparatus hinges (figure 6).

In a simplified version the underlying part of the apparatus can be rigidly constrained to the slide, and be prevented from oscillating.

The underlying part of the apparatus comprises a first rectangular frame 4, an upper cross-member 41 of which is hinged to the body 22 by means of the pivots 23.

Two uprights 42 and 43 extend downwardly from the upper cross-member 41 and are reciprocally joined at the base thereof by a lower cross-member 44.

The upright 42 exhibits a straight C-shaped section, to the base of which a rigid bar 421 is fixed, occupying almost the entire length of the upright 42.

Two slides 422, to which a plate 423 is constrained, slide on the bar 421.

The width of the bar 421 is smaller than the internal width of the upright, and each slide 422 comprises lateral guide wheels 430 which roll on the edges of the upright in order to keep the slide aligned (figure 6).

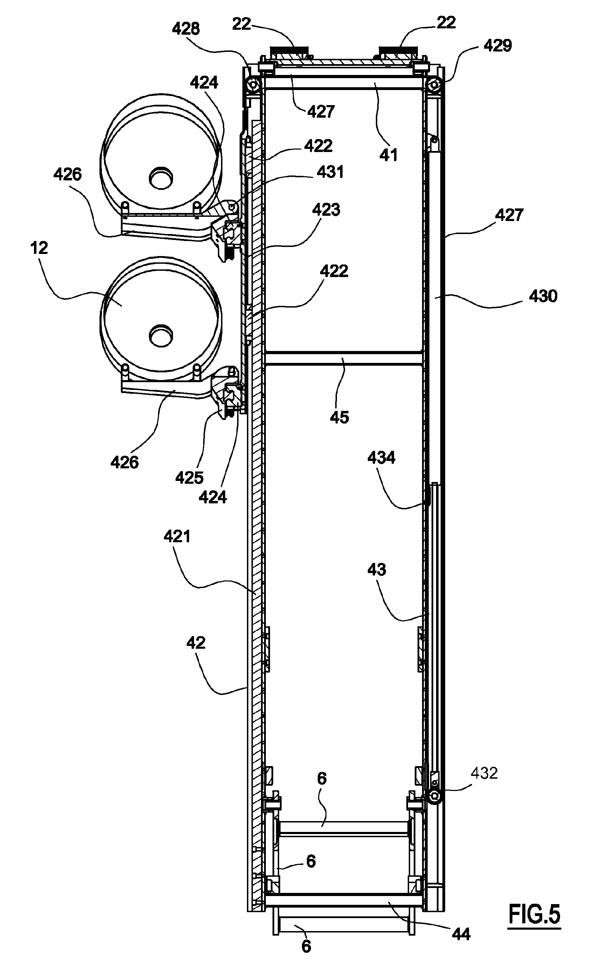

On the opposite side to the upright, the plate 423 bears two fixed bars 424, which are slightly inclined with respect to the upright, each of which bars 424 sustains a support 425, to which support 425 a second frame 426 is hinged at a point denoted by 431 (figure 5).

The frame 426 is destined to receive a container 12.

The distance between the bars 424 is the same as the vertical distance between the cradles of two superposed planes 11.

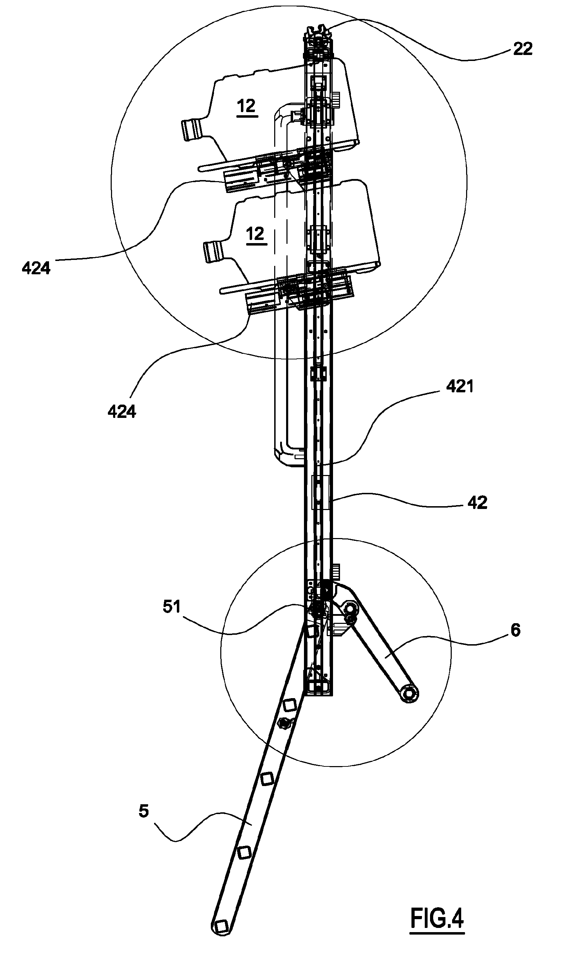

The frame 426 can assume an adjacent position to the upright, as on the right in figure 2, and a lowered position as in figure 4, in figure 5 and on the left in figure 2.

The plate 423 is suspended from a cable 427 wound on two small pulleys 428 and 429, which cable 427 crosses the upper cross-member 41, and descends in the oppositely positioned upright 43.

The upright 43 also exhibits a C-shaped section with the cavity facing outwards, and internally houses a gas spring 430, a stem of which at an end thereof bears a pulley 432 on which the cable 427 is wound, which cable 427 then rises in the upright 43, the end of the cable 427 being constrained at a point denoted by 434, which is the approximate halfway-point of the upright 43.

Thanks to this configuration, each excursion of the pulley 432 is always half the corresponding excursion of the plate 423, while the force bearing upon the pulley 432 is twice the weight of the plate 423 plus any load present.

A stiffening cross-member 45 is arranged between the two uprights.

The length of the frame 4 is preferably such that it occupies the distance between the upper member 2 and the plane of the truck (figure 2).

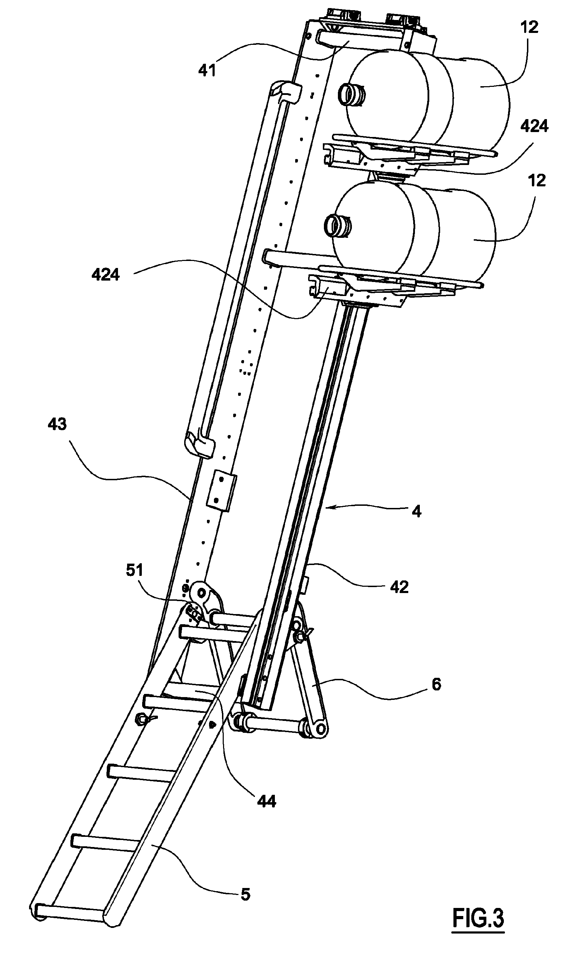

Near the base of the frame 4, a ladder 5 is hinged on an axle 51, via known means (not illustrated), which ladder 5 can assume two positions, a lowered position visible on the left in figure 1 and figure 2, and in figure 3 and in figure 4, in which position the ladder rests on the lower cross-member 44 of the frame 4, and a raised position, visible on the right in figure 1 and figure 2, in which the ladder is contained within the frame 4.

A further third frame 6 is hinged, in a known way (not illustrated) on the opposite side to the side where the ladder 5 oscillates, near the base of the uprights 42 and 43, which further third frame 6 can oscillate between a first position close to the frame 4, resting by means of two stops (not illustrated) against the uprights 42 and 43, and a position which is distant from the frame 4.

These two positions are both visible on the left and on the right in figure 2, which also shows that in the position close to the first frame 4, the third frame 6 rests against the edge of the loading plane 1 of the truck.

The apparatus functions as follows.

In the rest position the apparatus is in the configuration illustrated on the right in figure 1.

When the containers are to be unloaded, the apparatus is made to oscillate towards the outside of the loading plane as illustrated on the left in figure 1, and the ladder is lowered; the third frame 6 is made to oscillate in the position close to the first frame 4 until it is resting against the first frame 4, and the second frames 426 are put in a horizontal position.

By sliding along the member 2, the apparatus is arranged to face the containers to be collected, with the frames 426 situated exactly facing the two containers to be unloaded.

In this position the entire underlying part of the apparatus is resting on the loading plane, and in particular the third frame 6 is resting on the edge of the loading plane.

The operator, having ascended the ladder 5, has only to drag the two containers onto the two frames 426 facing the containers, and then to guide the plate 423, to which the frames 426 are hinged, as far as the base of the frame 4.

In this position the operator can easily collect each of the containers and transfer the containers to an adjacent truck.

Clearly a person skilled in the art could make variants of, and improvements to, the apparatus without leaving the protective ambit of the claims below.

## Claims

1. An apparatus for removing containers from a loading plane of a truck comprising at least a side-member positioned above, at a distance from, and parallel to, a lateral edge of the plane, on which side-member a slide moves, to which slide a first frame is inferiorly constrained; a ladder being hinged to a base of the first frame, which ladder can be arranged in a lowered position, resting against a lower cross-member of the first frame and in a raised position internally of an outer bulk of the first frame; a sliding plate being provided on an upright which sliding plate hingedly bears at least a second frame, which second frame can be arranged in a lowered position, approximately perpendicular to the upright and in a raised position adjacent to the upright.

2. The apparatus of claim 1 **characterised in that** the first frame is rigidly constrained to the slide.

3. The apparatus of claim 1 **characterised in that** the first frame is hinged to the slide on an axis which is parallel to the side-member.

4. The apparatus of claim 3 **characterised in that** a third frame hinged to the first frame in proximity of the hinge of the ladder oscillates in an opposite direction to the ladder, thus assuming a first position which is close to the first frame, or a second position which is distant from the first frame.

5. The apparatus of claim 4 **characterised in that** the third frame, in the position therof close to the first frame, extends inferiorly beyond the first frame thus resting against the edge of the loading plane.

6. The apparatus of claim 4 **characterised in that** the plate which bears the at least one second frame is counterweighted.

7. The apparatus of claim 6 **characterised in that** a gas spring performs a counterweighting action, the gas spring being contained within an upright positioned opposite the upright on which the plate slides

8. The apparatus of claim 7 **characterised in that** the plate which bears the at least one second frame is suspended from a cable wound on two pulleys internally of an upper cross-member of the first frame and in an oppositely positioned upright, where the cable is wound on a pulley situated at an end of the gas spring, and is fixed at a point approximately half-way up the upright.
